# EUROPÄISCHE PATENTANMELDUNG

(11) **EP 2 717 189 A1**
(43) Veröffentlichungstag der Anmeldung: **09.04.2014**
(21) Anmeldenummer: 13004671.7
(22) Anmeldetag: 26.09.2013
(51) Int. Cl.: G06F 21/55, G06F 21/77, G07F 7/08

(54) **Verfahren zur Erkennung eines kopierten Speicherabbilds**

(30) Priorität: 05.10.2012 DE 102012019513
(71) Anmelder: Giesecke & Devrient GmbH, 81677 München (DE)
(72) Erfinder: Gibis, Oliver, 81825 München (DE)

(57) **Zusammenfassung**

Verfahren für einen tragbaren Datenträger, wie z.B. eine Chipkarte oder eine SIM-Karte, um zu erkennen, ob sich im Speicher des Datenträgers ein kopiertes Speicherabbild eines anderen Datenträgers befindet. Ferner dient das Verfahren dazu, dass wenn der Datenträger ein kopiertes Speicherabbild erkennt, sich der Datenträger dann sperrt. Dies verhindert, dass durch ein illegales Kopieren eines Speicherabbilds funktionsfähige Datenträger, sogenannte Klone, hergestellt werden. Das Verfahren wertet die Zugriffszeiten auf den Speicher beim Lesen und/oder Schreiben aus, um zu erkennen, ob die im Speicherabbild gespeicherten Referenzzugriffszeiten, die während der Herstellung des Datenträgers gemessen wurden, mit den aktuell ermittelten Zugriffszeiten übereinstimmen. Falls die aktuell ermittelten Zugriffszeiten und die Referenzzugriffszeiten nicht innerhalb einem bestimmten Toleranzbereich liegen, wird der Datenträger gesperrt.

## Beschreibung

Die Erfindung offenbart ein Verfahren zum Erkennen eines Speicherabbildes, welches sich im Speicher eines tragbaren Datenträgers befindet, wobei das Speicherabbild von einem anderen tragbaren Datenträger kopiert und auf den Datenträger gespeichert wurde.

Tragbare Datenträger, wie z.B. Chipkarten, Kreditkarten, SIM-Karten, M2M-Karten, welche ein Chipmodul mit einem Speicher, z.B. einen Flash-Speicher, haben, bieten die Möglichkeit, sowohl Programmcode als auch Daten über einen sogenannten Boot-Loader, welcher vom Chiphersteller bereits auf Chipmodulen für tragbare Datenträger gespeichert wird, zu laden. Zusammen mit ausgelieferten leeren Chipmodulen, welche z.B. schon in einen Kartenkörper eines tragbaren Datenträgers eingebaut sind, erhält ein Kunde auch einen Schlüssel zur Authentisierung gegenüber dem Boot-Loader und kann damit anschließend beliebige Daten im Chipmodul des tragbaren Datenträgers speichern.

Wenn es z.B. einem Angreifer gelingt, illegal in den Besitz eines funktionstüchtigen Speicherabbildes eines komplett funktionstüchtigen tragbaren Datenträgers, z.B. eine Kreditkarte, zu gelangen, dann kann der Angreifer beliebig viele funktionstüchtige Kopien dieses tragbaren Datenträgers, sogenannte Klone, herstellen, indem er das illegal erlangte Speicherabbild auf leere Chipmodule von tragbaren Datenträgern lädt.

Möglichkeiten, um illegal an ein funktionstüchtiges Speicherabbild eines tragbaren Datenträgers zu gelangen, gibt es viele, wie z.B. mittels Lichtblitzangriff auf Chipmodule von tragbaren Datenträgern deren Speicher auszulesen, was in sogenannten DFA-Laboren in der Vergangenheit bereits mehrfach reproduzierbar nachgewiesen wurde, dass Teile des Speichers, z.B. Programmcodes und Daten, aus dem tragbaren Datenträger, z.B. einer Chipkarte, ausgelesen werden konnten. Andere Möglichkeiten, um illegal an ein funktionstüchtiges Speicherabbild zu gelangen, sind beispielsweise Sicherheitslücken in Fertigung oder Produktion von tragbaren Datenträgern oder durch spezielle Geräte, welche ein Schreiben von Daten auf tragbare Datenträger mitprotokollieren.

Das Aussehen des Körpers eines sogenannten geklonten Datenträgers kann beispielsweise mittels Druckverfahren dem Aussehen eines originalen tragbaren Datenträgers nachempfunden werden.

Das illegale Herstellen von Kopien von funktionstüchtigen tragbaren Datenträgern, z.B. zum Bezahlen, kann einen immensen finanziellen Schaden bewirken.

Aktuelle Produkte enthalten keine Sicherheitsmechanismen gegen ein illegales Kopieren von funktionstüchtigen, tragbaren Datenträgern. Zwar existieren beispielsweise in Chipkarten implementierte Gegenmaßnahmen, welche das illegale Auslesen, sogenanntes Dumping, eines Speicherinhalts verhindern sollen, jedoch kommt es dennoch immer wieder vor, daß es z.B. einem DFA-Labor gelingt, Teile eines Speicherinhalts durch z.B. Lichtangriffe auszulesen.

Bei vielen tragbaren Datenträgern ist es jedoch so, daß die aus dem Speicher ausgelesenen Daten verschlüsselt sind, so daß ein Angreifer mit den erhaltenen Daten meist nichts anfangen kann, wenn er die Daten weiter verarbeiten möchte. Allerdings ist es insbesondere im Fall von flashbasierten tragbaren Datenträgern so, daß der Angreifer die Daten ohnehin so benötigt, wie sie im Speicher stehen, da er die Daten auch wieder so in einen tragbaren Datenträger mit Chipmodul schreiben muss.

Nachteilig am Stand der Technik ist, dass das illegale Kopieren von Speicherinhalten eines tragbaren Datenträgers, z.B. einer Chipkarte, weiterhin möglich und nicht ausgeschlossen ist und auch nicht mit Sicherheit vermieden werden kann. Mitarbeitern von Kartenherstellern ist es möglich Speicherabbilder zu stehlen. Momentan gibt es keine Sicherheitsmaßnahme in einem tragbaren Datenträger, welche feststellen kann, ob es sich um einen originalen oder einen gefälschten Datenträger handelt, bzw. der tragbare Datenträger kann selbst nicht feststellen, ob sein Speicherabbild eine legale Kopie von einem Kartenhersteller oder eine illegale Kopie von einem Fälscher ist.

DE 197 55 796 B4 offenbart eine Kommunikation zwischen einer Basisstation und einem Mobiltelefon. In dem Mobiltelefon werden für die Abwicklung der Kommunikation mit der Basisstation elektronische Seriennummern verwendet. Eine elektronische Seriennummer wird in einen EEPROM einprogrammiert, wenn ein elektronisches Sicherheitsbit den Wert null enthält bzw. die Seriennummer wird nicht programmiert, wenn das Sicherheitsbit den Wert eins enthält.

Aufgabe der Erfindung ist es eine Lösung zu finden, dass der tragbare Datenträger selbst erkennen kann, ob in seinem Speicher ein kopiertes Speicherabbild gespeichert ist.

Die Aufgabe der Erfindung wird durch den unabhängigen Anspruch und den nebengeordneten Anspruch gelöst. Vorteilhafte Ausführungen sind in den abhängigen Ansprüchen beschrieben.

Zur Lösung der Aufgabe offenbart die Erfindung ein Verfahren für einen tragbaren Datenträger, um zu erkennen, ob in seinem Speicher ein kopiertes Speicherabbild eines anderen tragbaren Datenträgers gespeichert ist, welches dadurch gekennzeichnet ist, dass mindestens ein erster und mindestens ein zweiter Messwert für eine Zugriffszeit auf den Speicher zum Lesen und/ oder Schreiben bestimmt werden.

Ein vorteilhaftes Ausführungsbeispiel offenbart, dass der erste Messwert als Referenzwert in einer Produktionsumgebung des Datenträgers bestimmt und im Speicherabbild gespeichert wird und der zweite Messwert nach der Produktion im Feld während dem Betrieb bestimmt wird.

Ein weiteres vorteilhaftes Ausführungsbeispiel offenbart, dass der erste und der zweite Messwert für jede Speicherseite bestimmt werden.

Ein weiteres vorteilhaftes Ausführungsbeispiel offenbart, dass eine erste Differenz zwischen dem ersten Messwert einer ersten Speicherseite und dem ersten Messwert einer zweiten Speicherseite berechnet wird.

Ein weiteres vorteilhaftes Ausführungsbeispiel offenbart, dass eine zweite Differenz zwischen dem zweiten Messwert einer ersten Speicherseite und dem zweiten Messwert einer zweiten Speicherseite berechnet wird.

Ein weiteres vorteilhaftes Ausführungsbeispiel offenbart, dass eine dritte Differenz zwischen der ersten Differenz und der zweiten Differenz berechnet wird.

Ein weiteres vorteilhaftes Ausführungsbeispiel offenbart, dass die dritte Differenz geprüft wird, ob sie innerhalb einem vorgebbaren Bereich liegt.

Ein weiteres vorteilhaftes Ausführungsbeispiel offenbart, dass wenn die dritte Differenz außerhalb einem definierten Bereich liegt, die Funktion des Datenträgers gesperrt wird.

Als weitere Lösung offenbart die Erfindung einen tragbaren Datenträger, welcher eingerichtet ist ein Verfahren gemäß der obigen Diskussion auszuführen.

Ein vorteilhaftes Ausführungsbeispiel offenbart, dass der Datenträger ein Chipmodul mit Flashspeicher aufweist.

Ein weiteres vorteilhaftes Ausführungsbeispiel offenbart, dass der Datenträger eine kontaktlose Schnittstelle und/ oder eine kontaktgebundene Schnittstelle aufweist.

Im Folgenden wird ein Ausführungsbeispiel der Erfindung anhand der beigefügten Figur detailliert beschrieben.

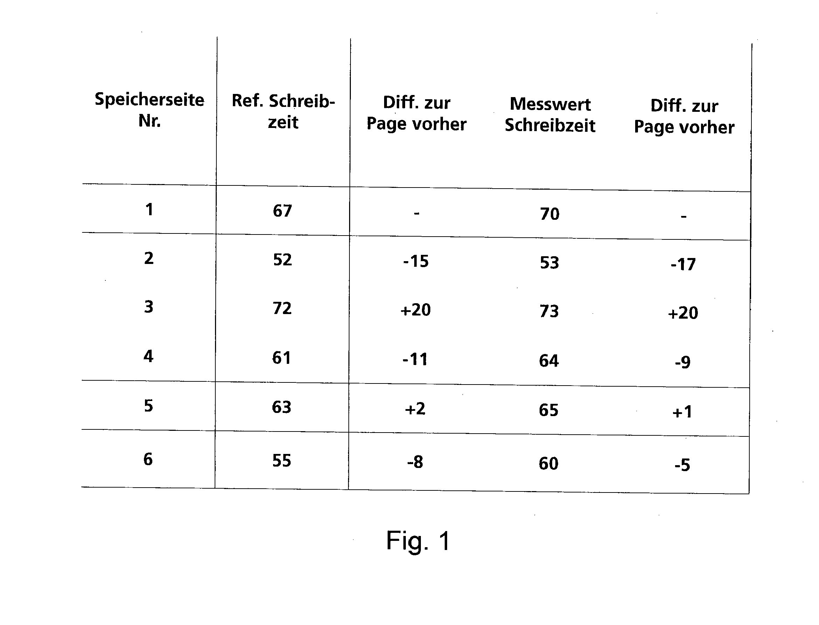

Figur 1 zeigt eine Tabelle, aus der für jede Speicherseite, z.B. eine Flash-Speicherseite, eine Referenz-Schreibzeit, sogenannter erster Messwert, und eine gemessene Schreibzeit, sogenannter zweiter Messwert, und die jeweiligen Differenzen zu den Messwerten der vorherigen Speicherseite hervorgehen.

Kern der Erfindung ist die Erfassung von Zugriffszeiten auf den Speicher eines tragbaren Datenträgers, z.B. eine Chipkarte eines Kreditinstituts oder eine SIM-Karte oder ein elektronischer Führerschein oder ein Personalausweis mit Chip, beim Schreiben und/ oder Lesen um zu erkennen, ob sich eine Kopie eines Speicherabbilds eines anderen tragbaren Datenträgers im Speicher des vorliegenden Datenträgers befindet.

Bei der Herstellung eines tragbaren Datenträgers wird zum ersten Mal ein funktionsfähiges Speicherabbild auf den Datenträger bzw. in einen Speicher eines in den Datenträger eingebauten Chipmoduls geschrieben. Bevor das Speicherabbild auf den Datenträger geschrieben wird oder im Anschluss daran werden die Zugriffszeiten zum Lesen und/ oder zum Schreiben auf den Speicher, insbesondere auf die einzelnen Speicherseiten ermittelt. Die ermittelten Zugriffszeiten bilden einen Referenzwert für die Zugriffszeit auf den Speicher bzw. die jeweilige Speicherseite, welche einmal für immer im Speicherabbild abgespeichert werden. Der Referenzwert wird auch als erster Messwert bezeichnet. Somit wird eine eindeutige Beziehung zwischen dem Datenträger und dem Speicherabbild hergestellt.

Nach der Auslieferung des tragbaren Datenträgers misst und dokumentiert der Datenträger selber die Zugriffszeiten auf den Speicher bzw. die Speicherseiten während der Benutzung im Feld. Die herbei ermittelten Zugriffszeiten werden auch als zweiter Messwert bezeichnet.

Ein direkter Vergleich zwischen den Referenzwerten bzw. ersten Messwerten und den nach der Auslieferung durch den Datenträger selbst gemessenen Zugriffszeiten bzw. zweiten Messwerten ist allerdings wegen folgender Gründe nicht möglich. Äußere Einflüsse, wie z.B. die Umgebungstemperatur, verändern die Schreib-/Lese-Zeiten des Datenträgers. Ferner verändern sich die Schreib-/Lese-Zeiten aufgrund von Alterung.

Diese Veränderungen haben dabei folgende Charakteristik.

Äußere Einflüsse wirken auf den gesamten Speicher des Datenträgers und damit auch auf alle Speicherseiten. Insbesondere bei den Speicherseiten, welche häufig beschrieben und/oder gelesen werden, stehen Informationen über Zeiten zum Schreiben und/oder Lesen kurzfristig zur Verfügung. Die äußeren Einflüsse verändern die Schreib-/ Lese-Zeiten des ganzen Speichers bzw. aller Speicherseiten in dieselbe Richtung, d.h. alle Zeiten werden entweder länger oder kürzer.

Der Speicher wird nicht gleichmäßig beschrieben und/oder gelesen. Somit verändern sich die Schreib-/ Lese-Zeiten insgesamt unterschiedlich. Allerdings verändern sich die Schreib-/Lese-Zeiten von Speicherbereichen oder Speicherseiten, welche gleichmäßig beschrieben und/oder gelesen werden, vergleichsweise gleichmäßig.

Um diese beiden Effekte zu umgehen, werden die Differenzen zwischen den Schreib- und/ oder Lese-Zeiten von mindestens zwei Speicherbereichen oder Speicherseiten verglichen.

Erfindungsgemäß wird eine erste Differenz zwischen dem ersten Messwert bzw. Referenzwert einer ersten Speicherseite und dem ersten Messwert bzw. Referenzwert einer zweiten Speicherseite berechnet wird.

Entsprechend wird eine zweite Differenz zwischen dem zweiten Messwert bzw. im Feld selbst gemessenen Zugriffszeit einer ersten Speicherseite und dem zweiten Messwert bzw. im Feld selbst gemessenen Zugriffszeit einer zweiten Speicherseite berechnet.

Nachdem die erste und zweite Differenz für die Referenzwerte bzw. erste Messwerte und die im Feld selbst gemessenen Zugriffszeiten bzw. zweite Messwerte bestimmt wurden, wird eine dritte Differenz aus der ersten und zweiten Differenz gebildet. Solange die dritte Differenz innerhalb einem vorher definierbaren Toleranzbereich liegt, befindet sich das Speicherabbild auf dem dazugehörigen Datenträger, auf den es während der Herstellung des Datenträgers gespeichert worden ist.

Falls die dritte Differenz außerhalb des Toleranzbereichs liegt, ist dies ein Hinweis dafür, dass sich das Speicherabbild auf einem Datenträger befindet, auf den das Speicherabbild nicht während der Herstellung des Datenträgers gespeichert worden ist. Aufgrund der Referenzwerte, die das Speicherabbild aufweist, kann der Datenträger selbst feststellen, ob das Speicherabbild zu dem Datenträger gehört, auf dem es sich befindet oder ob es von einem Datenträger kopiert und auf einen anderen Datenträger kopiert worden ist.

Ausgehend von dem obigen Ergebnis, ob die dritte Differenz innerhalb oder außerhalb des Toleranzbereichs liegt, bleibt der Datenträger entweder weiterhin funktionsfähig oder wird gesperrt.

Dies soll anhand dem folgenden Beispiel verdeutlicht werden. Ausgehend von Figur 1 hat die Speicherseite Nr.1 eine Referenzschreibzeit von 67 und die Speicherseite 2 eine Referenzschreibzeit von 52. Als erste Differenz zwischen Speicherseite 2 und 1 erhält man den Wert von - 15. Entsprechend erhält man als zweite Differenz für die im Feld gemessenen Schreib/Zugriffszeiten für die Speicherseiten 2 und 1 von 53 und 70 einen Wert von - 17. Nachdem sich -15 und -17 in einem sehr ähnlichen Bereich befinden, ist dies ein Zeichen dafür, dass das Speicherabbild zum Datenträger gehört, auf dem es sich befindet. Berechnet man eine dritte Differenz aus erster und zweiter Differenz erhält man als Wert 2. Dies bedeutet, dass die Wahrscheinlichkeit umso höher ist, dass ein Speicherabbild zu dem Datenträger gehört, auf dem es sich befindet, je kleiner die dritte Differenz ist. Idealerweise ist die dritte Differenz null, wenn das Speicherabbild zum Datenträger gehört, auf dem es sich befindet.

Falls sich jedoch bei der zweiten Differenz ein deutlich unterschiedlicher Wert ergibt, z.B. +2 anstatt -17, und damit auch bei der dritten Differenz, dann ist dies ein Hinweis dafür, dass das Speicherabbild nicht zu dem Datenträger gehört, auf den es gespeichert ist. In diesem Fall würde sich dann der Datenträger automatisch sperren.

Zur weiteren Absicherung können in das oben beschriebene Schema noch weitere Speicherseiten oder Differenzen einbezogen werden, z.B. gegen eine unerwartet plötzliche Alterung einer Speicherseite, können die Messwerte für die anderen Speicherseiten verwendet werden.

Die in der Herstellungsumgebung ermittelten Referenzwerte ergeben in Kombination mit den während der Verwendung im Feld ermittelten Messwerte über die Zugriffszeiten auf den Speicher beim Schreiben und/oder Lesen durch die Bildung der Differenzen ein sicheres Merkmal um Kopien von Speicherabbildern zu erkennen und ein Klonen von Datenträgern zu verhindern.

Je mehr Speicherseiten in die oben beschriebene Überprüfung einbezogen werden, desto höher ist die Wahrscheinlichkeit, dass geklonte Datenträger erkannt werden.

In der obigen Diskussion wird von Speicherseiten gesprochen. In heutigen Datenträgern werden häufig "High Update Activity Area" (HUAA) Speicherbereiche verwendet, die sich beispielsweise zur Implementierung der vorliegenden Erfindung eignen.

Ein HUAA Speicher ist speziell zur Speicherung von Daten gedacht, die sich zwar sehr oft ändern, aber gleichzeitig dauerhaft gespeichert werden müssen, z.B. auch nach dem Ausschalten oder einem Energieverlust der Chipkarte müssen die gespeicherten Daten erhalten bleiben.

Ein HUAA Speicher umfasst mehrere Speicherseiten, sogenannte Flash-Pages, und wird als sogenannter Ringpuffer verwaltet. Ein Ringpuffer bedeutet, dass die Speicherseiten der Reihe nach beschrieben werden. Ist die letzte Speicherseite voll, dann wird wieder bei der ersten Speicherseite begonnen.

Vorteilhaft an der Erfindung ist, dass keine Änderungen an der Hardware des tragbaren Datenträgers notwendig sind, um die Erfindung zu implementieren.

Die Referenzzeiten müssen im Feld nicht neu geschrieben werden, selbst wenn sich die im Feld gemessenen Zugriffszeiten auf die Speicherseiten ändern. Dies spart einerseits Zeit und nutzt andererseits die entsprechende Speicherseite nicht ab.

Die vorliegende Erfindung bietet eine höhere Sicherheit vor unberechtigtem Kopieren des Speicherabbildes als herkömmliche Seriennummern, z.B. statische oder reproduzierbare.

Ferner ist die vorliegende Erfindung deutlich einfacher zu implementieren als bisher für diese Zwecke verwendete sogenannte Physical Unclonable Functions, welche einen zusätzlichen Hardwareaufwand erforderlich machen.

## Patentansprüche

1. Verfahren für einen tragbaren Datenträger, um zu erkennen, ob in seinem Speicher ein kopiertes Speicherabbild eines anderen tragbaren Datenträgers gespeichert ist, **dadurch gekennzeichnet, dass** mindestens ein erster und mindestens ein zweiter Messwert für eine Zugriffszeit auf den Speicher zum Lesen und/ oder Schreiben bestimmt werden.

2. Verfahren nach Anspruch 1, **dadurch gekennzeichnet, dass**
o der erste Messwert als Referenzwert in einer Produktionsumgebung des Datenträgers bestimmt und im Speicherabbild gespeichert wird und
o der zweite Messwert nach der Produktion im Feld während dem Betrieb bestimmt wird.

3. Verfahren nach Anspruch 2, **dadurch gekennzeichnet, dass** der erste und der zweite Messwert für jede Speicherseite bestimmt werden.

4. Verfahren nach Anspruch 3, **dadurch gekennzeichnet, dass** eine erste Differenz zwischen dem ersten Messwert einer ersten Speicherseite und dem ersten Messwert einer zweiten Speicherseite berechnet wird.

5. Verfahren nach Anspruch 3, **dadurch gekennzeichnet, dass** eine zweite Differenz zwischen dem zweiten Messwert einer ersten Speicherseite und dem zweiten Messwert einer zweiten Speicherseite berechnet wird.

6. Verfahren nach den Ansprüchen 4 und 5, **dadurch gekennzeichnet, dass** eine dritte Differenz zwischen der ersten Differenz und der zweiten Differenz berechnet wird.

7. Verfahren nach Anspruch 6, **dadurch gekennzeichnet, dass** die dritte Differenz geprüft wird, ob sie innerhalb einem vorgebbaren Bereich liegt.

8. Verfahren nach Anspruch 7, **dadurch gekennzeichnet, dass** wenn die dritte Differenz außerhalb einem definierten Bereich liegt, die Funktion des Datenträgers gesperrt wird.

9. Tragbarer Datenträger, welcher eingerichtet ist ein Verfahren gemäß den Ansprüchen 1 bis 8 auszuführen.

10. Datenträger nach Anspruch 9, **dadurch gekennzeichnet, dass** der Datenträger ein Chipmodul mit Flashspeicher aufweist.

11. Datenträger nach Anspruch 9, **dadurch gekennzeichnet, dass** der Datenträger eine kontaktlose Schnittstelle und/ oder eine kontaktgebundene Schnittstelle aufweist.
